# EUROPÄISCHE PATENTSCHRIFT

(11) **EP 3 648 956 B1**
(45) Veröffentlichungstag und Bekanntmachung des Hinweises auf die Patenterteilung: **27.11.2024**
(21) Anmeldenummer: 18731833.2
(22) Anmeldetag: 15.06.2018
(51) Int. Cl.: B29C 65/16, A47L 15/42, B29C 65/44, D06F 39/12, A47J 31/44

(54) **WASSERFÜHRENDES HAUSHALTSGERÄT UND VERFAHREN ZUM HERSTELLEN EINES WASSERFÜHRENDEN HAUSHALTSGERÄTS**
WATER-USING HOUSEHOLD APPLIANCE AND METHOD
APPAREIL ÉLECTROMÉNAGER À CIRCULATION D'EAU ET PROCÉDÉ

(30) Priorität: 07.07.2017 DE 102017211670
(43) Veröffentlichungstag der Anmeldung: 13.05.2020
(73) Patentinhaber: BSH Hausgeräte GmbH, 81739 München (DE)
(72) Erfinder: GEBAUER, Hans, 89415 Lauingen (DE); HALTMAYER, Werner, 91550 Dinkelsbühl (DE); BISGIN, Sami, 89407 Dillingen (DE)
(86) Internationale Anmeldenummer: PCT/EP2018/065982
(87) Internationale Veröffentlichungsnummer: WO 2019/007663

(56) Entgegenhaltungen:
- DE-A1- 102004 043 716
- JP-A- 2012 232 531

## Beschreibung

Die vorliegende Erfindung betrifft eine Haushaltsgeschirrspülmaschine und ein Verfahren zum Herstellen einer derartigen Haushaltsgeschirrspülmaschine.

Haushaltsgeschirrspülmaschinen können neben einem Spülbehälter einen zusätzlichen, an dem Spülbehälter angebrachten Flüssigkeitsbehälter, wie beispielsweise einen Wärmetauscher oder einen Halter für Heizungsrohre, aufweisen, welcher mit dem Spülbehälter thermisch gekoppelt ist.

Die Druckschrift DE 10 2011 086 788 A1 offenbart ein wasserführendes Haushaltsgerät mit einem Spülbehälter, an dem außenseitig ein wasserführendes Bauteil angeordnet ist, wobei ein Flüssigkeitsraum des wasserführenden Bauteils zumindest teilweise von zumindest einer Seitenwand des Spülbehälters begrenzt ist, und wobei das wasserführende Bauteil über wenigstens eine Klebeverbindung an dem Spülbehälter befestigt ist.

Die Druckschrift DE 10 2004 043 716 A1 offenbart ein Verfahren zum Befestigen eines aus Kunststoff hergestellten Mitnehmers in einer Wäschetrommel einer Waschmaschine, worin der oder die Mitnehmer mindestens zwei innenliegende, einen entlang ihrer Mittellinie sich erstreckenden Hohlraum aufweisende Dome haben, die senkrecht auf das Mantelblech der Wäschetrommel weisen und der Befestigung des Mitnehmers dienen. Es wird in das Mantelblech der Wäschetrommel für jeden Mitnehmer ein Lochbild entsprechend der Anordnung der Dome eines Mitnehmers gestanzt und der Mitnehmer wird mit seinen die Kontaktfläche des Mitnehmers zum Mantelblech überragenden Domenden so auf das Mantelblech gesetzt, dass die Domenden die Löcher des Lochbilds durchdringen. Dann werden von der Gegenseite in die Hohlräume der Dome Gegenhalter eingeführt werden und von der Befestigungsseite her werden Niederhalter gegen das Mantelblech gefahren. Danach werden von der Befestigungsseite her beheizte Formstempel gegen die Domenden gefahren, bis die Domenden im Warmformverfahren erzeugte Pilzhauben haben, die mit ihren Hutkrempen von außen auf den die Löcher umgebenden Bereichen des Mantelbleches aufliegen. Schließlich werden in dieser Reihenfolge alle Formstempel, Niederhalter und Gegenhalter zurückgefahren.

Die Druckschrift JP 2012 232531 A2 offenbart ein Verfahren zum Verbinden eines Harzformkörpers und eines Metallformkörpers durch Bestrahlung mittels eines Laserstrahls von der Harzformkörperseite her. Ein Klebefilm ist zwischen dem Harzformkörper und dem Metallformkörper angeordnet. Der Klebefilm besteht aus einer Harzzusammensetzung, welche ein thermoplastisches Elastomer und einen Laserlichtabsorber enthält. Das thermoplastische Elastomer hat einen Schmelzpunkt und eine Schmelzviskosität von V10 bei einer Temperatur, die um V10 höher als der Schmelzpunkt und um 50 °C höher als der Schmelzpunkt ist. Wenn die Schmelzviskosität V50 beträgt, ist V10/V50 ≤ 10 erfüllt, und der Laserlichtabsorber ist ein Nigrosinfarbstoff. Der harzgeformte Körper kann aus einem thermoplastischen Harz mit einem Schmelzpunkt bestehen und das thermoplastische Elastomer des Klebefilms kann einen Schmelzpunkt, welcher niedriger als der Schmelzpunkt des thermoplastischen Harzes ist, haben. Der Klebefilm kann keine Klebrigkeit aufweisen. Das thermoplastische Harz kann ein Polyesterharz sein und der metallgeformte Körper aus Kupfer, Phosphorbronze, Edelstahl, Magnesium, Aluminium und Eisen bestehen. Weiterhin kann der Metallformkörper eine Wärmeleitfähigkeit von 50 W/mK oder mehr aufweisen.

Vor diesem Hintergrund besteht eine Aufgabe der vorliegenden Erfindung darin, eine verbesserte Haushaltsgeschirrspülmaschine und ein verbessertes Verfahren zum Herstellen einer Haushaltsgeschirrspülmaschine zur Verfügung zu stellen.

Demgemäß wird eine Haushaltsgeschirrspülmaschine vorgeschlagen. Die Haushaltsgeschirrspülmaschine umfasst eine Wandung, welche aus einem Metallwerkstoff gefertigt ist und welche Teil eines Spülbehälters der Haushaltsgeschirrspülmaschine ist, und eine an der Wandung vorgesehene Einrichtung, welche aus einem Kunststoffmaterial gefertigt ist. Die Einrichtung ist mit Hilfe einer Laserschweißverbindung fest mit der Wandung verbunden. Weiterhin weist die Einrichtung einen Befestigungsflansch auf, welcher mit Hilfe der Laserschweißverbindung fest mit der Wandung verbunden ist. Ferner ist die Wandung in dem Bereich, in welchem der Befestigungsflansch der Einrichtung auf der Wandung aufliegt, mit einer Oberflächenstrukturierung versehen.

Dadurch, dass die Einrichtung mit Hilfe der Laserschweißverbindung fest mit der Wandung verbunden ist, kann auf einen Schritt des Verklebens der Einrichtung mit der Wandung verzichtet werden. Hierdurch kann die Haushaltsgeschirrspülmaschine kostengünstiger hergestellt werden.

Der Spülbehälter der Haushaltsgeschirrspülmaschine umfasst vorzugsweise eine erste Wandung, insbesondere einen Boden, eine zweite Wandung, insbesondere eine Decke, eine dritte Wandung, insbesondere eine Rückwand, eine vierte Wandung, insbesondere eine erste Seitenwand, und eine fünfte Wandung, insbesondere eine zweite Seitenwand. Die Haushaltsgeschirrspülmaschine kann mehrere Einrichtungen umfassen, welche an unterschiedlichen Wandungen des Spülbehälters vorgesehen sind. Der Spülbehälter der Haushaltsgeschirrspülmaschine kann ferner eine verschwenkbar an diesem gelagerte Tür umfassen.

Die Wandung ist insbesondere eine Seitenwand des Spülbehälters der Haushaltsgeschirrspülmaschine. Die Wandung kann beispielsweise aus dem Werkstoff 1.4301, 1.4310, 1.4510 oder 1.4016 ausgebildet sein. Die Haushaltsgeschirrspülmaschine kann eine Vielzahl derartiger Einrichtungen aufweisen, welche an unterschiedlichen Wandungen der Haushaltsgeschirrspülmaschine vorgesehen sein können. Die Einrichtung kann jedoch zumindest abschnittsweise auch aus einem Metallwerkstoff gefertigt sein. Insbesondere ist jedoch zumindest jener Bereich der Einrichtung, welcher mit der Wandung verbunden ist, aus dem Kunststoffmaterial gefertigt. Das Kunststoffmaterial kann beispielsweise ein Polypropylen (PP), insbesondere ein PP-Natur, ein mit einem Füllstoff, wie beispielsweise Talkum, gefülltes PP, beispielsweise PP Talkum 20 (PPTD20) oder beispielsweise PP Talkum 30 (PPTD30), ein Acrylnitril-Butadien-Styrol-Copolymer (ABS), ein Polymethylmethacrylat (PMMA), ein Polyvinylchlorid (PVC), ein Polyoxymethylen (POM), ein Polyamid (PA), insbesondere ein mit Glasfasern gefülltes PA, beispielsweise PA 6.6 GF 20 oder ein PA 6.6 GF 30, oder ein thermoplastisches Elastomer (TPE) sein. Alternativ können auch andere Kunststoffmaterialien eingesetzt werden. Die Einrichtung ist vorzugsweise ein Kunststoffspritzgussbauteil. Hierdurch kann die Einrichtung kostengünstig in großen Stückzahlen hergestellt werden.

Die Einrichtung ist vorzugsweise wasserführend. Daher kann die Einrichtung auch als wasserführende Einrichtung bezeichnet werden. Beispiele für wasserführende Einrichtungen sind ein Wärmetauscher, ein Wasserzulauf, ein Wasserablauf, ein Pumpensumpf oder dergleichen. Die Einrichtung kann jedoch auch kein Wasser führen. In diesem Fall kann die Einrichtung beispielsweise ein Halter für einen Heizungsdraht oder ein Heizungsrohr sein. Beispielsweise kann die Einrichtung als Halbschale ausgebildet sein, in die Heizungsdrähte und/oder Heizungsrohre eingeschnappt oder eingeclipst sind. Nachfolgend wird jedoch davon ausgegangen, dass die Einrichtung wasserführend ist.

In einer Weiterbildung der Haushaltsgeschirrspülmaschine, bei welcher die Einrichtung wasserführend ist, umfasst die Haushaltsgeschirrspülmaschine eine Wandung, welche aus einem Metallwerkstoff gefertigt ist, eine an der Wandung vorgesehene wasserführende Einrichtung, welche aus einem Kunststoffmaterial gefertigt ist, und einen Flüssigkeitsraum, welcher von der Wandung und der Einrichtung begrenzt ist, wobei die Einrichtung mit Hilfe einer Laserschweißverbindung fest mit der Wandung verbunden ist.

Dadurch, dass der Flüssigkeitsraum der Einrichtung abgewandt nur durch die aus dem Metallwerkstoff gefertigte Wandung begrenzt ist, kann eine Wärmeübertragung von dem Flüssigkeitsraum auf einen an einer der Einrichtung abgewandten Innenseite der Wandung vorgesehenen Spülraum und umgekehrt signifikant verbessert werden.

Der Befestigungsflansch der Einrichtung weist beispielsweise eine Breite von 2 bis 20 mm auf. Der Befestigungsflansch der Einrichtung läuft vorzugsweise vollständig um die Einrichtung um. Die Oberflächenstrukturierung der Wandung kann eine Vielzahl linienförmig angeordneter Vertiefungen aufweisen. Die Vertiefungen können dabei horizontal, vertikal oder schräg angeordnet sein. Die Oberflächenstrukturierung der Wandung kann auch eine matrixförmig oder schachbrettartig angeordnete Anordnung von Vertiefungen aufweisen, welche unterschiedlich orientiert sind. Die Vertiefungen können gerade, gekrümmt, kreisförmig sein oder eine beliebige andere Geometrie aufweisen.

Gemäß einer Ausführungsform ist die Einrichtung ein Wärmetauscher, ein Wassereinlauf oder ein Halter für einen Heizungsdraht oder ein Heizungsrohr.

Die Einrichtung kann auch ein beliebiges anderes wasserführendes Bauteil der Haushaltsgeschirrspülmaschine sein. Beispielsweise kann die Einrichtung auch ein Wasserauslauf, ein Pumpensumpf oder dergleichen sein.

Gemäß einer weiteren Ausführungsform umfasst die Einrichtung einen Speicherabschnitt und einen Funktionsabschnitt.

Der Speicherabschnitt der Einrichtung ist insbesondere dazu eingerichtet, Wasser und/oder Spülflotte zu speichern. Der Speicherabschnitt der Einrichtung ist direkt mit der Wandung verbunden. Der Funktionsabschnitt der Einrichtung kann beispielsweise eine Vielzahl an Wasserkanälen, Ventilen, Steuerelementen oder anderen Systemen umfassen. Der Speicherabschnitt der Einrichtung ist vorzugsweise ein getrennt von dem Funktionsabschnitt gefertigtes Bauteil. Der Speicherabschnitt der Einrichtung und der Funktionsabschnitt der Einrichtung können fest miteinander verbunden sein. Alternativ können der Speicherabschnitt der Einrichtung und der Funktionsabschnitt der Einrichtung auch materialeinstückig ausgebildet sein.

Gemäß einer weiteren Ausführungsform ist die Wandung aus einem Chrom- oder Chrom-Nickel-Stahl gefertigt.

Insbesondere ist die Wandung ein Feinblech. Das heißt, die Wandung weist eine Wandstärke von weniger als 1,3 mm, insbesondere von etwa 0,35 bis 0,5 mm, auf. Beispielsweise können die Werkstoffe 1.4301, 1.4310, 1.4510 oder 1.4016 eingesetzt werden.

Der Spülbehälter umfasst vorzugsweise eine erste Wandung, insbesondere einen Boden, eine zweite Wandung, insbesondere eine Decke, eine dritte Wandung, insbesondere eine Rückwand, eine vierte Wandung, insbesondere eine erste Seitenwand, und eine fünfte Wandung, insbesondere eine zweite Seitenwand. Das Haushaltsgerät kann mehrere Einrichtungen umfassen, welche an unterschiedlichen Wandungen des Spülbehälters vorgesehen sind. Der Spülbehälter kann ferner eine verschwenkbar an diesem gelagerte Tür umfassen.

Ferner wird ein Verfahren zum Herstellen einer Haushaltsgeschirrspülmaschine vorgeschlagen. Das Verfahren umfasst die Schritte: Bereitstellen einer Wandung, welche aus einem Metallwerkstoff gefertigt ist und welche Teil eines Spülbehälters der Haushaltsgeschirrspülmaschine ist, und einer Einrichtung, welche aus einem Kunststoffmaterial gefertigt ist, und Anordnen der Einrichtung an der Wandung. Das erfindungsgemäße Verfahren ist dadurch gekennzeichnet, dass die einen Befestigungsflansch aufweisende Einrichtung mit Hilfe einer Laserschweißverbindung fest mit der Wandung verbunden wird und dass in dem Bereich, in welchem der Befestigungsflansch der Einrichtung an der Wandung aufliegen wird, vor dem Anordnen der Einrichtung an der Wandung zumindest abschnittsweise eine Oberflächenstrukturierung erzeugt wird.

Bei dem Bereitstellen der Einrichtung kann diese beispielsweise in einem Kunststoffspritzgussverfahren hergestellt werden. Das Laserverschweißen der Einrichtung mit der Wandung kann beispielsweise durch Wärmeleitungsschweißen oder Laserdurchstrahlschweißen erfolgen.

Beim Wärmeleitungsschweißen schmilzt der Laserstrahl die Fügepartner entlang der Fügestelle auf, wobei in der Regel Strahlungsintensitäten bis 100 kW/cm² verwendet werden. Da Metalle für Laserstrahlen, abhängig von der eingestrahlten Wellenlänge, eine Reflektivität von bis zu 95 % besitzen können, reicht die Intensität nicht aus, um eine Dampfkapillare (keyhole) zu erzeugen. Die Schmelzen fließen ineinander und erstarren zu einer Schweißnaht. Wärmeleitungsschweißen wird angewendet, um dünnwandige Teile zu verbinden, zum Beispiel für Ecknähte an Sichtkanten von Gehäusen. Weitere Anwendungen finden sich in der Elektronik. Der Laser erzeugt eine glatte, abgerundete Schweißnaht, welche nicht mehr nachbearbeitet werden muss. Für die genannten Anwendungen eignen sich gepulste oder dauerstrichbetriebene Festkörperlaser. Die Energie gelangt beim Wärmeleitungsschweißen nur durch Wärmeleitung in das Werkstück. Deshalb beträgt die Nahttiefe nur einige Zehntelmillimeter bis einen Millimeter. Die Wärmeleitfähigkeit des Werkstoffs begrenzt die maximale Nahttiefe. Die Nahtbreite ist immer größer als die Nahttiefe. Wenn die Wärme nicht schnell genug abfließen kann, steigt die Bearbeitungstemperatur über die Verdampfungstemperatur. Metalldampf entsteht, die Einschweißtiefe steigt sprunghaft an, und der Prozess geht ins Tiefschweißen über. Das Wärmeleitungsschweißen findet meist im Überlappverfahren bei einer Überlappung von mindestens 3 mm, vorzugsweise von mindestens 4 mm, statt.

Das Laserdurchstrahlschweißen findet meist im Überlappverfahren bei einer Überlappung von mindestens 3 mm, vorzugsweise von mindestens 4 mm, statt. Dabei werden zwei unterschiedliche Schweißpartner verwendet. Der obere Schweißpartner, beispielsweise ein Kunststoff, ist für die verwendete Laserwellenlänge transparent. Durch diesen strahlt der Laser nahezu ungehindert hindurch. Aufgrund der Transparenz erhitzt er sich kaum. Der untere Schweißpartner, beispielsweise ein insbesondere vorgenannter Metallwerkstoff, muss die Strahlung absorbieren. Dazu kann zum Beispiel eine Beigabe von absorbierenden Partikeln (zirka 0,3 Gewichtsprozent Ruß) beitragen. Dieser Stoff nimmt die Energie auf, beginnt zu schmelzen und gibt dabei die entstandene Wärme durch Wärmeleitung auch an den oberen Partner weiter. Damit der Energieübergang und ein Materialkontakt stattfinden, müssen beide Partner oft zusammengepresst werden, zumindest jedoch passgenau zueinander sein. Durch das Zusammenfließen der beiden Stoffe kann so eine Schweißnaht hergestellt werden. Die Schweißenergie ist so zu wählen, dass der Laser das Werkstück nur zu etwa 60 % durchdringt. Wird dann von beiden Seiten gelasert, ist eine völlige Durchschweißung gewährleistet. Zu hohe Leistungen sollten vermieden werden, da sie zu Schädigungen des Metalls führen können. Häufig werden hierfür effiziente Diodenlaser eingesetzt, diese weisen bei den erforderlichen kleinen Leistungen, beispielsweise 5 bis 150 Watt, eine für dieses Schweißverfahren ausreichende Strahlqualität auf.

Beim Simultanschweißen wird die gesamte Schweißnaht gleichzeitig (simultan) erwärmt. Während eine lineare Schweißnaht einfach realisierbar ist, können Radien in der Schweißnaht durch Aneinanderreihen der Laser-Dioden nur angenähert werden oder müssen durch zusätzliche strahlformende Elemente abgebildet werden. Zur Erzielung der notwendigen homogenen Leistungsdichteverteilung über die gesamte Schweißnaht ist es erforderlich, die einzelnen Laserelemente entsprechend anzuordnen und getrennt zu steuern.

Bei einer Weiterbildung des Verfahrens ist die Einrichtung wasserführend. Das Verfahren umfasst dann die Schritte: Bereitstellen einer Wandung, welche aus einem Metallwerkstoff gefertigt ist, und einer wasserführenden Einrichtung, welche aus einem Kunststoffmaterial gefertigt ist, Anordnen der Einrichtung an der Wandung zum Bilden eines Flüssigkeitsraums, welcher von der Wandung und der Einrichtung begrenzt wird, und Laserverschweißen der Einrichtung mit der Wandung.

Die Oberflächenstrukturierung kann eine Vielzahl linienförmig angeordneter Vertiefungen aufweisen. Die Vertiefungen können dabei horizontal, vertikal oder schräg angeordnet sein. Die Vertiefungen können eine beliebige Geometrie aufweisen. Beispielsweise können die Vertiefungen gerade, gekrümmt, wellenförmig oder dergleichen sein. Die Vertiefungen können beispielsweise eine Tiefe von 10 bis 100 µm, vorzugsweise von 15 bis 90 µm, insbesondere von 20 bis 80 µm, aufweisen.

Der Befestigungsflansch läuft vorzugsweise vollständig um die Einrichtung um. Der Befestigungsflansch kann beispielsweise eine Breite von 2 bis 20 mm aufweisen. Der Befestigungsflansch liegt insbesondere flächig an der Wandung an.

Gemäß einer Ausführungsform wird die Oberflächenstrukturierung mit Hilfe nanogepulster Laserstrahlen durchgeführt.

Diese Oberflächenstrukturierung weist, gestützt durch eine Vielzahl von Versuchen, folgende Eckdaten auf: eine mittlere Leistung von etwa 20 W, eine Flächenleistung von etwa 0,2 cm²/s, eine Pulsfrequenz von 20 bis 100 kHz und eine Wellenlänge von 1064 nm. Die Matrix der jeweiligen Oberflächenstrukturierung besitzt eine Leistung von 20 bis 100 %, eine Frequenz von 20 bis 80 kHz und eine konstante Vorschubgeschwindigkeit von etwa 200 mm/s. Der Linienabstand der nanogepulsten Laserstrahlen beträgt etwa 0,12 mm.

Die Laserstrukturierung im nanogepulsten Betrieb des Lasers kann mittels einer Laser-Scanning-Mikroskopie (LSM), sowohl in 2D als auch in 3D, ermittelt werden. Die Laserstrukturierung ist im Allgemeinen von Materialauswürfen und Strukturtiefen, gegebenenfalls auch von Einbettmitteln, geprägt. Materialauswürfe weisen bevorzugt einen durchschnittlichen Abstand im Bereich von 30 bis 120 µm, vorzugsweise von 40 bis 110 µm, insbesondere von 50 bis 100 µm, auf. Strukturtiefen hingegen weisen eine durchschnittliche Tiefe von 10 bis 100 µm, vorzugsweise von 15 bis 90 µm, insbesondere von 20 bis 80 µm, auf.

Unter einem Pulslaser versteht man einen Laser, welcher das Licht nicht kontinuierlich emittiert, sondern gepulst betrieben wird, das heißt, das Licht wird in zeitlich begrenzten Portionen emittiert. Beim Einbringen der Oberflächenstrukturierung wird die Wandung zumindest abschnittsweise aufgeschmolzen. Beim Aufschmelzen verdampft das Material der Wandung zumindest teilweise und/oder es wird aufgeschmolzenes Material aus der Vertiefung ausgeworfen. Hierdurch entstehen seitlich an der Vertiefung Erhebungen. Die Oberflächenstrukturierung weist insbesondere Hinterschnitte auf, in welche das aufgeschmolzene Kunststoffmaterial der Einrichtung einfließen kann. Hierdurch wird eine formschlüssige Verbindung der Einrichtung mit der Wandung hergestellt. Eine formschlüssige Verbindung entsteht durch das Ineinander- oder Hintergreifen von mindestens zwei Verbindungspartnern, hier den Vertiefungen und dem Kunststoffmaterial der Einrichtung.

Alternativ kann die Oberflächenstrukturierung auch mit Hilfe von Dauerstrich-Laserstrahlen durchgeführt werden.

Diese Oberflächenstrukturierung weist, gestützt durch eine Vielzahl von Versuchen, folgende Eckdaten auf: eine maximale Leistung von 400 W, eine Flächenleistung von etwa 0,84 cm²/s, und eine Wellenlänger von 1070 nm. Die Matrix der jeweiligen Oberflächenstrukturierung besitzt eine Leistung von 100 bis 400 W, ein bis fünf Überfahrten und eine konstante Vorschubgeschwindigkeit von etwa 10.000 mm/s. Der Linienabstand der Dauerstrich-Laserstrahlen beträgt etwa 0,12 mm.

Die Laserstrukturierung im Dauerstrich-Betrieb des Lasers kann mittels einer Laser-Scanning-Mikroskopie (LSM), sowohl in 2D als auch in 3D, in Erfahrung gebracht werden. Die Laserstrukturierung ist im Allgemeinen von Materialauswürfen und Strukturtiefen, gegebenenfalls auch von Einbettmitteln, geprägt. Materialauswürfe weisen bevorzugt einen durchschnittlichen Abstand im Bereich von 30 bis 120 µm, vorzugsweise von 40 bis 110 µm, insbesondere von 50 bis 100 µm, auf. Strukturtiefen hingegen weisen eine durchschnittliche Tiefe von 10 bis 100 µm, vorzugsweise von 15 bis 90 µm, insbesondere von 20 bis 80 µm, auf.

Weitere mögliche Implementierungen der Haushaltsgeschirrspülmaschine und/oder des Verfahrens umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Haushaltsgeschirrspülmaschine und/oder des Verfahrens hinzufügen.

Weitere vorteilhafte Ausgestaltungen und Aspekte der Haushaltsgeschirrspülmaschine und/oder des Verfahrens sind Gegenstand der Unteransprüche sowie der im Folgenden beschriebenen Ausführungsbeispiele der Haushaltsgeschirrspülmaschine und/oder des Verfahrens. Im Weiteren werden der Haushaltsgeschirrspülmaschine und/oder das Verfahren anhand von bevorzugten Ausführungsformen unter Bezugnahme auf die beigelegten Figuren näher erläutert.

Es zeigen
- Fig. 1: eine schematische perspektivische Ansicht einer Ausführungsform einer Haushaltsgeschirrspülmaschine;
- Fig. 2: eine schematische Schnittansicht der Haushaltsgeschirrspülmaschine gemäß Fig. 1;
- Fig. 3: die Detailansicht III gemäß Fig. 2;
- Fig. 4: die Detailansicht IV gemäß Fig. 3; und
- Fig. 5: ein schematisches Blockdiagramm einer Ausführungsform eines Verfahrens zum Herstellen der Haushaltsgeschirrspülmaschine gemäß Fig. 1.

In den Figuren sind gleiche oder funktionsgleiche Elemente mit denselben Bezugszeichen versehen worden, sofern nichts anderes angegeben ist.

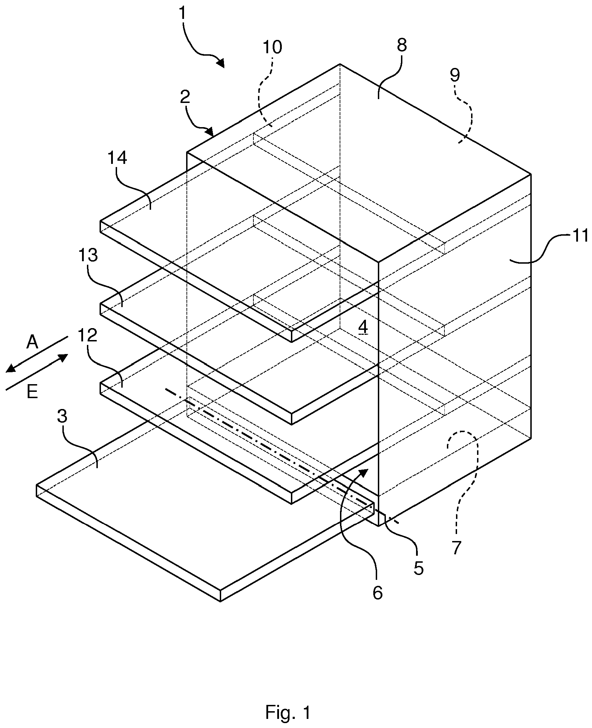

Die Fig. 1 zeigt eine schematische perspektivische Ansicht einer Ausführungsform einer Haushaltsgeschirrspülmaschine 1. Die Haushaltsgeschirrspülmaschine 1 umfasst einen Spülbehälter 2, welcher durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugsweise quaderförmig. Der Spülbehälter 2 kann in einem Gehäuse der Haushaltsgeschirrspülmaschine 1 angeordnet sein. Der Spülbehälter 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geöffnet oder geschlossen werden. Mit Hilfe der Tür 3 kann eine Beschickungsöffnung 6 des Spülbehälters 2 geschlossen oder geöffnet werden. Der Spülbehälter 2 weist mehrere Wandungen 7 bis 11 auf. Der Spülbehälter 2 umfasst bevorzugt eine erste Wandung 7, insbesondere einen Boden, eine der ersten Wandung 7 gegenüberliegend angeordnete zweite Wandung 8, insbesondere eine Decke, eine der geschlossenen Tür 3 gegenüberliegend angeordnete dritte Wandung 9, insbesondere eine Rückwand, eine vierte Wandung 10, insbesondere eine erste Seitenwand, und eine der vierten Wandung 10 gegenüberliegend angeordnete fünfte Wandung 11, insbesondere eine zweite Seitenwand.

Die erste Wandung 7, die zweite Wandung 8, die dritte Wandung 9, die vierte Wandung 10 und die fünfte Wandung 11 können beispielsweise aus einem Edelstahlblech gefertigt sein. Beispielsweise kommt als Werkstoff ein rostfreier Edelstahl mit der Werkstoffkennnummer 1.4301, 1.4310, 1.4510 oder 1.4016 in Frage. Alternativ kann beispielsweise die erste Wandung 7 aus einem Kunststoffmaterial gefertigt sein. Der Spülbehälter 2 kann auf einem nicht gezeigten Basisträger angeordnet sein. Der Basisträger ist vorzugsweise ein Kunststoffbauteil. Insbesondere kann der Basisträger ein Kunststoffspritzgussbauteil sein.

Die Haushaltsgeschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschubrichtung E (Pfeil) in den Spülbehälter 2 hineinschiebbar und entgegen der Einschubrichtung E (Pfeil) in einer Auszugsrichtung A (Pfeil) aus dem Spülbehälter 2 herausziehbar.

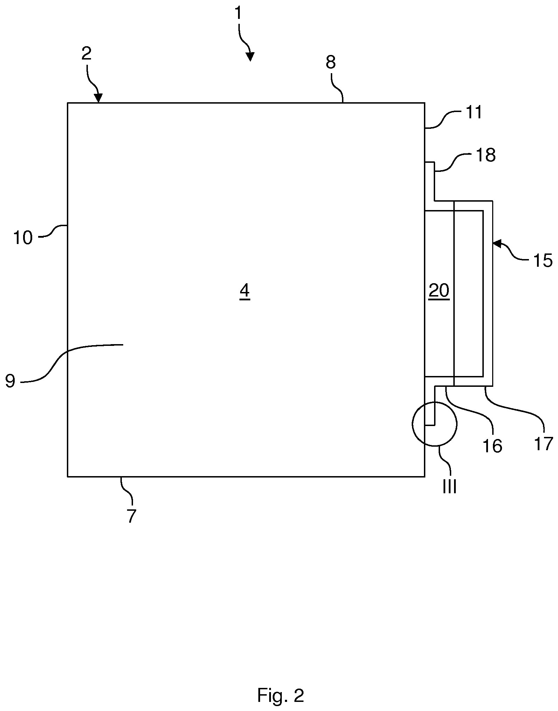

Die Fig. 2 zeigt eine schematische Schnittansicht der Haushaltsgeschirrspülmaschine 1. Die Haushaltsgeschirrspülmaschine 1 umfasst eine Einrichtung 15, welche an einer der Wandungen 7 bis 11 vorgesehen sein kann. Vorzugsweise ist die Einrichtung 15 wasserführend. Daher kann die Einrichtung 15 auch als wasserführende Einrichtung bezeichnet werden. Beispiele für wasserführende Einrichtungen 15 sind ein Wärmetauscher, ein Wasserzulauf, ein Wasserablauf, ein Pumpensumpf oder dergleichen. Die Einrichtung 15 kann jedoch auch kein Wasser führen. In diesem Fall kann die Einrichtung 15 beispielsweise ein Halter für einen Heizungsdraht oder ein Heizungsrohr sein. Beispielsweise kann die Einrichtung 15 als Halbschale ausgebildet sein, in welche Heizungsdrähte und/oder Heizungsrohre eingeschnappt oder eingeclipst sind. Nachfolgend wird jedoch davon ausgegangen, dass die Einrichtung 15 wasserführend ist.

Vorzugsweise ist die Einrichtung 15 an der vierten Wandung 10 oder an der fünften Wandung 11 vorgesehen. Weiterhin kann die Einrichtung 15 auch an der dritten Wandung 9 oder an der zweiten Wandung 8 vorgesehen sein. Es können auch mehrere Einrichtungen 15 vorgesehen sein. In der Fig. 2 ist jedoch lediglich eine Einrichtung 15 gezeigt, welche an der fünften Wandung 11 vorgesehen ist.

Die Einrichtung 15 kann, wie zuvor erwähnt, beispielsweise ein Wärmetauscher oder ein Wassereinlauf sein. Für den Fall, dass die Einrichtung 15 ein Wärmetauscher ist, kann diese einen Speicherabschnitt 16 und einen Funktionsabschnitt 17 umfassen. Der Speicherabschnitt 16 der Einrichtung 15 und der Funktionsabschnitt 17 der Einrichtung 15 können voneinander getrennt gefertigte Bauteile sein, welche fest miteinander verbunden sind. Alternativ können der Speicherabschnitt 16 der Einrichtung 15 und der Funktionsabschnitt 17 der Einrichtung 15 auch materialeinstückig ausgebildet sein.

Der Speicherabschnitt 16 der Einrichtung 15 ist dazu eingerichtet, Wasser und/oder Spülflotte zu speichern. Der Funktionsabschnitt 17 der Einrichtung 15 kann beispielsweise Kanäle, Ventile, verschiedene Systeme oder dergleichen umfassen. Die Einrichtung 15 kann dazu eingerichtet sein, Energie, insbesondere Wärmeenergie, beispielsweise in Form von erhitztem Wasser zu speichern. Diese Wärmeenergie kann an den Spülbehälter 2 abgegeben werden. Umgekehrt kann auch von dem Spülbehälter 2 Energie auf die Einrichtung 15 übertragen werden.

Die Einrichtung 15 und insbesondere der Speicherabschnitt 16 der Einrichtung 15 sind vorzugsweise aus einem Kunststoffmaterial gefertigt. Als Kunststoffmaterial kommen beispielsweise Polypropylen (PP), insbesondere ein PP-Natur, ein mit einem Füllstoff, wie beispielsweise Talkum, gefülltes PP, beispielsweise PP Talkum 20 (PPTD20) oder beispielsweise PP Talkum 30 (PPTD30), Acrylnitril-Butadien-Styrol-Copolymer (ABS), Polymethylmethacrylat (PMMA), Polyvinylchlorid (PVC), Polyoxymethylen (POM), Polyamid (PA), insbesondere mit Glasfaser gefülltes Polyamid, wie beispielsweise PA 6.6 GF 20 oder PA 6.6 GF 30, oder ein thermoplastisches Elastomer (TPE) in Frage. Die Einrichtung 15 kann auch aus unterschiedlichen Kunststoffmaterialien gefertigt sein. Weiterhin kann die Einrichtung 15 auch zumindest teilweise aus einem Metallwerkstoff gefertigt sein. Beispielsweise kommt als Metallwerkstoff ein rostfreier Edelstahl mit der Werkstoffkennnummer 1.4301, 1.4310, 1.4510 oder 1.4016 in Frage.

Der Speicherabschnitt 16 der Einrichtung 15 ist in Form einer Halbschale oder Wanne ausgebildet, welche in Richtung der fünften Wandung 11 offen ausgebildet ist. Zum Verbinden des Speicherabschnitts 16 der Einrichtung 15 mit der fünften Wandung 11 umfasst die Einrichtung 15 einen Befestigungsflansch 18, welcher vorzugsweise vollständig um den Speicherabschnitt 16 der Einrichtung 15 und insbesondere um die Einrichtung 15 umläuft. Der Befestigungsflansch 18 kann eine Breite von etwa 5 bis 20 mm aufweisen.

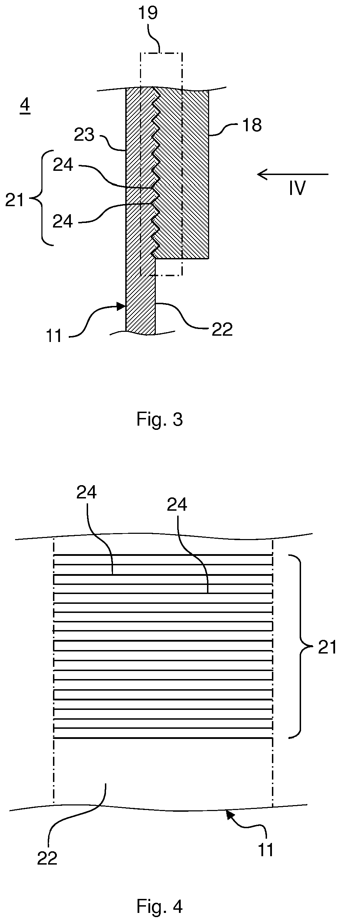

Der Befestigungsflansch 18 ist vollständig aus einem Kunststoffmaterial gefertigt. Die Einrichtung 15 und insbesondere der Speicherabschnitt 16 der Einrichtung 15 ist mit Hilfe einer Laserschweißverbindung 19 (siehe Fig. 3) fest und wasserdicht mit der fünften Wandung 11 verbunden. Die Einrichtung 15 und insbesondere der Speicherabschnitt 16 der Einrichtung 15 schließt somit mit der fünften Wandung 11 einen Flüssigkeitsraum 20 ein. Das heißt, der Flüssigkeitsraum 20 ist nur durch die fünfte Wandung 11, das heißt, nur durch den Metallwerkstoff der fünften Wandung 11, von dem Spülraum 4 getrennt. Hierdurch ist eine besonders gute Wärmeübertragung von dem Flüssigkeitsraum 20 auf den Spülraum 4 und umgekehrt gewährleistet. Hierdurch können optimale Diffusionsverhältnisse zwischen dem Flüssigkeitsraum 20 und dem Spülraum 4 erreicht werden. Hierdurch kann die Energiebilanz der Haushaltsgeschirrspülmaschine 1 im Vergleich zu einer Anordnung, bei welcher zwischen dem Flüssigkeitsraum 20 und der fünften Wandung 11 noch eine Kunststoffschicht vorgesehen ist, deutlich verbessert werden.

Der Funktionsabschnitt 17 der Einrichtung 15 umfasst eine aus einem Kunststoffmaterial gefertigte Halbschale, welche die zuvor erwähnten Kanäle, Ventile und/oder weiteren Systeme beinhaltet. Der Funktionsabschnitt 17 der Einrichtung 15 kann mit Hilfe einer Folie und eines Laserschweißverfahrens dichtgeschweißt werden. Hier verbessert auch der Einsatz der Folie die Diffusionsbedingungen und damit die Energiebilanz der Haushaltsgeschirrspülmaschine 1.

Die zuvor erläuterten Vorteile können auch für den Fall genutzt werden, dass die Einrichtung 15 ein Wassereinlauf ist. Die Einrichtung 15 kann ferner auch als Verbundbauteil ausgelegt werden, bei welchem zuerst der Funktionsabschnitt 17 der Einrichtung 15 mit Hilfe der zuvor erwähnten Folie dichtgeschweißt wird und dann der Speicherabschnitt 16 der Einrichtung 15 mit Hilfe des Laserschweißverfahrens, insbesondere mit Hilfe eines Kurzpulslasers, direkt mit der fünften Wandung 11 zusammengefügt wird.

Der Spülbehälter 2, und insbesondere die fünfte Wandung 11, sind aus einem ChromStahl oder Chrom-Nickel-Stahl gefertigt. Insbesondere ist die fünfte Wandung 11 ein Feinblech. Feinbleche sind Bleche mit einer Stärke von weniger als 3 mm. Um eine zuverlässige und dauerhafte Verbindung des Befestigungsflanschs 18 mit der fünften Wandung 11 zu erreichen, ist die fünfte Wandung 11 im Bereich der Laserschweißverbindung 19 mit einer Oberflächenstrukturierung 21 (siehe Fig. 3 und Fig. 4) versehen. Die Oberflächenstrukturierung 21 wird beispielsweise mit Hilfe eines nanogepulsten Lasers in eine dem Spülraum 4 abgewandte Außenseite 22 der fünften Wandung 11 eingebracht. Die Tiefe der Oberflächenstrukturierung 21 ist dabei so gewählt, dass mit Hilfe des Einsatzes von Inertgas auf einer Innenseite 23 der fünften Wandung 11 keine Oxidationsfarben auftreten. Die Oberflächenstrukturierung 21 dient zum einen der Oberflächenvergrößerung der Außenseite 22, und weiterhin bildet die Oberflächenstrukturierung 21 vorzugsweise Hinterschnitte aus, in welche das aufgeschmolzene Kunststoffmaterial des Befestigungsflanschs 18 hineinfließt und sich mit den Hinterschnitten formschlüssig verbindet.

Die Oberflächenstrukturierung 21 kann eine Vielzahl zeilenförmig angeordneter Vertiefungen 24 umfassen, von denen in den Fig. 3 und Fig. 4 jedoch lediglich zwei mit einem Bezugszeichen versehen sind. Die Vertiefungen 24 können in der Orientierung der Fig. 3 und Fig. 4 horizontal angeordnet sein. Die Vertiefungen 24 können jedoch auch vertikal oder schräg positioniert sein. Die Vertiefungen 24 können ferner abweichend von der Darstellung in den Fig. 3 und Fig. 4 auch eine gekrümmte, kreisförmige oder beliebige andere Geometrie aufweisen. Die Oberflächenstrukturierung 21 kann auch schachbrettartig oder matrixförmig angeordnete Vertiefungen 24 mit unterschiedlicher Orientierung umfassen. Hierdurch kann die Verbindung des Befestigungsflanschs 18 mit der Oberflächenstrukturierung 21 nochmals verbessert werden.

Beispielsweise können für die fünfte Wandung 11, jedoch auch für die anderen Wandungen 7 bis 10, die Werkstoffe 1.4301, 1.4310, 1.4510 oder 1.4016 eingesetzt werden. Die Vertiefungen 24 der Oberflächenstrukturierung 21 können beispielsweise eine Tiefe von 10 bis 100 µm, vorzugsweise von 15 bis 90 µm, insbesondere von 20 bis 80 µm, aufweisen. Seitlich entlang der Vertiefungen 24 können Erhöhungen gebildet werden, welche durch das Umschmelzen und Auswerfen des Materials der fünften Wandung 11 aus den Vertiefungen 24 erzeugt werden.

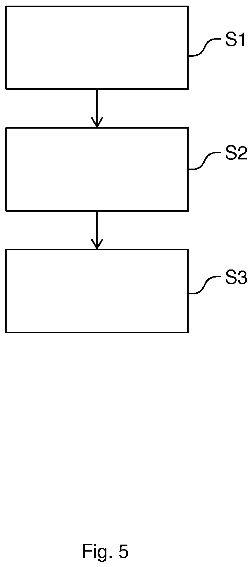

Die Fig. 5 zeigt ein schematisches Blockdiagramm eines Verfahrens zum Herstellen der Haushaltsgerschirrspülmaschine 1. In einem Schritt S1 wird der Spülbehälter 2, und insbesondere eine der Wandungen 7 bis 11 des Spülbehälters 2, bereitgestellt. Dabei ist die Wandung 7 bis 11 aus einem Metallwerkstoff, insbesondere aus dem Werkstoff 1.4301, 1.4310, 1.4510 oder 1.4016 gefertigt und die Wandung 7 bis 11 ist Teil eines Spülbehälters 2 der Haushaltsgeschirrspülmaschine 1. In dem Schritt S1 wird weiterhin die Einrichtung 15 bereitgestellt, welche zumindest abschnittsweise aus einem Kunststoffmaterial gefertigt ist. Die Einrichtung 15 kann beispielsweise in dem Schritt S1 mit Hilfe eines Kunststoffspritzgussverfahrens hergestellt werden.

In einem Schritt S2 wird die Einrichtung 15 an der Wandung 7 bis 11 angeordnet, um den Flüssigkeitsraum 20 zu bilden. Der Flüssigkeitsraum 20 wird dabei von der entsprechenden Wandung 7 bis 11 und der Einrichtung 15, insbesondere dem Speicherabschnitt 16 der Einrichtung 15, begrenzt.

In einem Schritt S3 wird die einen Befestigungsflansch 18 aufweisende Einrichtung 15 mit der entsprechenden Wandung 7 bis 11 mit Hilfe einer Laserschweißverbindung fest mit der Wandung 7 bis 11 verbunden. In dem Bereich der Wandung 7 bis 11, in welchem der Befestigungsflansch 18 der Einrichtung 15 an der Wandung 7 bis 11 aufliegen wird, wird vor dem Anordnen S2 der Einrichtung an der Wandung 7 bis 11 an derselben zumindest abschnittsweise eine Oberflächenstrukturierung 21 erzeugt. Für den Schweißprozess wird vorzugsweise ein Diodenlaser verwendet, wobei eine Vorschubgeschwindigkeit des Lasers die Leistung des verwendeten Lasers maßgeblich vorgibt. Die Einrichtung 15 wird mit Hilfe einer Spannvorrichtung relativ zu der entsprechenden Wandung 7 bis 11 positioniert und gegen diese gedrückt.

Das Laserverschweißen der Einrichtung 15 mit der Wandung 7 bis 11 kann beispielsweise mit Hilfe eines Laserdurchstrahlschweißverfahrens durchgeführt werden. Hierbei weist der Befestigungsflansch 18 im Bereich der verwendeten Laserwellenlänge einen hohen Transmissionsgrad für die Laserstrahlung auf. Die Laserstrahlung wird dann von der Außenseite 22 absorbiert, wodurch der Befestigungsflansch 18 zumindest abschnittsweise aufgeschmolzen wird. Alternativ kann das Laserverschweißen auch mit Hilfe eines Wärmeleitungsfügens durchgeführt werden. Hierdurch kann die entsprechende Wandung 7 bis 11 beispielsweise von der Innenseite 23 her erwärmt werden. Die Außenseite 22 wird dann durch Wärmeleitung derart erwärmt, dass der Befestigungsflansch 18 zumindest abschnittsweise aufschmilzt. Vor oder bei dem Anordnen der Einrichtung 15 an der entsprechenden Wandung 7 bis 11 in dem Schritt S2 wird die entsprechende Wandung 7 bis 11, wie zuvor schon erläutert, zumindest abschnittsweise oberflächenstrukturiert. Hierzu werden bevorzugt nanogepulste Laserstrahlen eingesetzt.

Dadurch, dass zwischen dem Flüssigkeitsraum 20 und dem Spülraum 4 keine Kunststoffwandung vorgesehen ist, wird zum einen die Wärmeübertragung von dem Flüssigkeitsraum 20 auf den Spülraum 4 deutlich verbessert, und zum anderen wird eine Materialersparnis durch den Wegfall des Kunststoffmaterials erzielt. Ein teurer, energieintensiver Spiegelschweißprozess entfällt.

Der Speicherabschnitt 16 der Einrichtung 15 kann mit der Variantenzahl eins gefertigt werden, die Differenzierung der Einrichtung 15 erfolgt dann über den Funktionsabschnitt 17 der Einrichtung 15. Der größte Vorteil der direkt an den Spülbehälter 2 angeschweißten Einrichtung 15 liegt in dem deutlich verbesserten Energiediffusionsverhältnis und damit in der deutlich verbesserten Energiebilanz. Durch den Entfall des Spiegelschweißens können kostengünstigere Kunststoffe mit besserem Fließindex benutzt werden. Die Spritzgeschwindigkeit beim Spritzgießen und damit die Fertigungskapazität kann erhöht werden, wodurch Investitionen reduziert werden können. Durch den Entfall des Spiegelschweißprozesses und des Einsatzes von Linienlaserschweißen beim Folienverbund kann besser fließender Kunststoff eingesetzt werden. Auch hier sind höhere Spritzgeschwindigkeiten möglich. Das Weglassen der Folie verbessert ebenfalls die Diffusionsverhältnisse und damit die Energiebilanz. In der Summe ergibt sich ein deutlicher Vorteil bezüglich Material und Prozesskosten, wenn der Laserschweißprozess eingesetzt wird.

### Verwendete Bezugszeichen

- 1: Haushaltsgeschirrspülmaschine
- 2: Spülbehälter
- 3: Tür
- 4: Spülraum
- 5: Schwenkachse
- 6: Beschickungsöffnung
- 7: Wandung
- 8: Wandung
- 9: Wandung
- 10: Wandung
- 11: Wandung
- 12: Spülgutaufnahme
- 13: Spülgutaufnahme
- 14: Spülgutaufnahme
- 15: Einrichtung
- 16: Speicherabschnitt
- 17: Funktionsabschnitt
- 18: Befestigungsflansch
- 19: Laserschweißverbindung
- 20: Flüssigkeitsraum
- 21: Oberflächenstrukturierung
- 22: Außenseite
- 23: Innenseite
- 24: Vertiefung

- A: Auszugsrichtung (Pfeil)
- E: Einschubrichtung (Pfeil)
- S1: Schritt
- S2: Schritt
- S3: Schritt
- III: Detailansicht
- IV: Detailansicht

## Patentansprüche

1. Haushaltsgeschirrspülmaschine (1), mit einer Wandung (7 bis 11), welche aus einem Metallwerkstoff gefertigt ist und welche Teil eines Spülbehälters (2) der Haushaltsgeschirrspülmaschine (1) ist, und einer an der Wandung (7 bis 11) vorgesehenen Einrichtung (15), welche aus einem Kunststoffmaterial gefertigt ist, **dadurch gekennzeichnet,**
- **dass** die Einrichtung (15) mit Hilfe einer Laserschweißverbindung (19) fest mit der Wandung (7 bis 11) verbunden ist,
- **dass** die Einrichtung (15) einen Befestigungsflansch (18) aufweist, welcher mit Hilfe der Laserschweißverbindung (19) fest mit der Wandung (7 bis 11) verbunden ist, und
- **dass** die Wandung (7 bis 11) in dem Bereich, in welchem der Befestigungsflansch (18) der Einrichtung (15) an der Wandung (7 bis 11) aufliegt, mit einer Oberflächenstrukturierung (21) versehen ist.

2. Haushaltsgeschirrspülmaschine (1) nach Anspruch 1, **dadurch gekennzeichnet, dass** die Einrichtung (15) ein Wärmetauscher, ein Wassereinlauf oder ein Halter für einen Heizungsdraht oder ein Heizungsrohr ist.

3. Haushaltsgeschirrspülmaschine (1) Anspruch 2, **dadurch gekennzeichnet, dass** die Einrichtung (15) einen Speicherabschnitt (16) und einen Funktionsabschnitt (17) umfasst.

4. Haushaltsgeschirrspülmaschine (1) nach Anspruch 1, 2 oder 3, **dadurch gekennzeichnet, dass** die Wandung (7 bis 11) aus einem Chrom- oder Chrom-Nickel-Stahl gefertigt ist.

5. Verfahren zum Herstellen einer Haushaltsgeschirrspülmaschine (1), mit den Schritten:
- Bereitstellen (S1) einer Wandung (7 bis 11), welche aus einem Metallwerkstoff gefertigt ist und welche Teil eines Spülbehälters (2) der Haushaltsgeschirrspülmaschine (1) ist, und einer Einrichtung (15), welche aus einem Kunststoffmaterial gefertigt ist, und
- Anordnen (S2) der Einrichtung (15) an der Wandung (7 bis 11),
**dadurch gekennzeichnet,**
- **dass** die einen Befestigungsflansch (18) aufweisende Einrichtung (15) mit Hilfe einer Laserschweißverbindung fest mit der Wandung (7 bis 11) verbunden wird (S3) und
- **dass** in dem Bereich der Wandung (7 bis 11), in welchem der Befestigungsflansch (18) der Einrichtung (15) an der Wandung (7 bis 11) aufliegen wird, vor dem Anordnen (S2) der Einrichtung (15) an der Wandung (7 bis 11) zumindest abschnittsweise eine Oberflächenstrukturierung (21) erzeugt wird.

6. Verfahren nach Anspruch 5, **dadurch gekennzeichnet, dass** die Oberflächenstrukturierung (21) mit Hilfe nanogepulster Laserstrahlen durchgeführt wird.

## Claims

1. Household dishwashing machine (1), comprising a wall (7 to 11) which is made from a metal material and which is part of a washing container (2) of the household dishwashing machine (1), and a device (15) which is provided on the wall (7 to 11) and which is made from a plastic material,
**characterised in that**
- the device (15) is fixedly connected to the wall (7 to 11) by means of a laser weld connection (19)
- the device (15) has a fastening flange (18) which is fixedly connected to the wall (7 to 11) by means of the laser weld connection (19), and
- in the region in which the fastening flange (18) of the device (15) bears against the wall (7 to 11), the wall is provided with a surface structuring (21).

2. Household dishwashing machine (1) according to claim 1, **characterised in that** the device (15) is a heat exchanger, a water inlet or a holder for a heating wire or a heating pipe.

3. Household dishwashing machine (1) claim 2, **characterised in that** the device (15) comprises a storage portion (16) and a functional portion (17).

4. Household dishwashing machine (1) according to claim 1, 2 or 3, **characterised in that** the wall (7 to 11) is made from a chromium steel or chromium-nickel steel.

5. Method for producing a household dishwashing machine (1), comprising the steps:
- providing (S1) a wall (7 to 11) which is made from a metal material and which is part of a washing container (2) of the household dishwashing machine (1), and a device (15) which is made from a plastic material, and
- arranging (S2) the device (15) on the wall (7 to 11),
**characterised in that**
- the device (15) having a fastening flange (18) is fixedly connected (S3) to the wall (7 to 11) by means of a laser weld connection and
- in the region of the wall (7 to 11) in which the fastening flange (18) of the device (15) will bear against the wall (7 to 11), before arranging (S2) the device (15) on the wall (7 to 11), a surface structuring (21) is at least partially produced thereon.

6. Method according to claim 5, **characterised in that** the surface structuring (21) is carried out by means of nano-pulsed laser beams.

## Revendications

1. Lave-vaisselle ménager (1), avec une paroi (7 à 11), laquelle est fabriquée en une matière métallique et laquelle fait partie d'une cuve de lavage (2) du lave-vaisselle ménager (1), et un dispositif (15) prévu sur la paroi (7 à 11), lequel est fabriqué en un matériau plastique, **caractérisé**
- **en ce que** le dispositif (15) est relié de manière fixe à la paroi (7 à 11) à l'aide d'une liaison soudée au laser (19),
- **en ce que** le dispositif (15) présente une bride de fixation (18), laquelle est reliée de manière fixe à la paroi (7 à 11) à l'aide d'une liaison soudée au laser (19), et
- **en ce que** dans la zone dans laquelle la bride de fixation (18) du dispositif (15) repose sur la paroi (7 à 11), la paroi (7 à 11) est dotée d'une structuration de surface (21).

2. Lave-vaisselle ménager (1) selon la revendication 1, **caractérisé en ce que** le dispositif (15) est un échangeur de chaleur, une entrée d'eau ou un support pour un câble de chauffage ou un tuyau de chauffage.

3. Lave-vaisselle ménager (1) selon la revendication 2, **caractérisé en ce que** le dispositif (15) comprend une section de stockage (16) et une section fonctionnelle (17).

4. Lave-vaisselle ménager (1) selon la revendication 1, 2 ou 3, **caractérisé en ce que** la paroi (7 à 11) est fabriquée en un acier au chrome ou au nickel-chrome.

5. Procédé de fabrication d'un lave-vaisselle ménager (1), comprenant les étapes :
- mise à disposition (S1) d'une paroi (7 à 11), laquelle est fabriquée en une matière métallique et laquelle fait partie d'une cuve de lavage (2) du lave-vaisselle ménager (1), et d'un dispositif (15), lequel est fabriqué en un matériau plastique, et
- disposition (S2) du dispositif (15) sur la paroi (7 à 11), **caractérisé**
- **en ce que** le dispositif (15) présentant une bride de fixation (18) est relié (S3) de manière fixe à la paroi (7 à 11) à l'aide d'une liaison soudée au laser et
- **en ce que** dans la zone de la paroi (7 à 11) dans laquelle la bride de fixation (18) du dispositif (15) reposera sur la paroi (7 à 11), une structuration de surface (21) est produite au moins par sections avant la disposition (S2) du dispositif (15) sur la paroi (7 à 11).

6. Procédé selon la revendication 5, **caractérisé en ce que** la structuration de surface (21) s'effectue à l'aide de faisceaux laser nanopulsés.
